# EUROPÄISCHE PATENTANMELDUNG

(11) **EP 3 477 847 A1**
(43) Veröffentlichungstag der Anmeldung: **01.05.2019**
(21) Anmeldenummer: 17198315.8
(22) Anmeldetag: 25.10.2017
(51) Int. Cl.: H02P 9/00, H02P 1/26

(54) **DOPPELT GESPEISTE ASYNCHRONMASCHINE SOWIE VERFAHREN ZUM BETREIBEN EINER DOPPELT GESPEISTEN ASYNCHRONMASCHINE**

(71) Anmelder: Siemens Aktiengesellschaft, 80333 München (DE)
(72) Erfinder: Zeichfüßl, Roland, 94099 Ruhstorf a. d. Rott (DE)

(57) **Zusammenfassung**

Die Erfindung betrifft eine doppelt gespeiste Asynchronmaschine (1), mit
- einem Rotor (3), der eine Erregerwicklung (30) aufweist,
- einem Stator (2), der eine Wicklungsanordnung (20) umfasst,
- einer elektrischen Erregereinheit (4) zum Erregen der Asynchronmaschine (1) über die Erregerwicklung (30), und
- einer Steuereinheit (5) zum Steuern der Erregereinheit (4) durch Einstellen zumindest einer elektrischen Größe für das Erregen.

Um eine erleichterte Steuerung der Erregung der Asynchronmaschine (1) zu ermöglichen, ist vorgesehen, dass
- die Steuereinheit (5) keine signaltechnische oder elektrische Verbindung zu dem Stator (2) aufweist, welche über eine reine Energieversorgung der Steuereinheit (5) hinausgeht, sodass die zumindest eine elektrische Größe unabhängig von elektrischen Statorgrößen der Wicklungsanordnung (20) von der Steuereinheit (5) einstellbar ist.

## Beschreibung

Die Erfindung betrifft eine doppelt gespeiste Asynchronmaschine mit einem Rotor, der eine Erregerwicklung zum Erregen der Asynchronmaschine aufweist, sowie mit einer Steuereinheit zum Steuern der Erregereinheit. Ein zweiter Aspekt der Erfindung betrifft ein Verfahren zum Betreiben einer doppelt gespeisten Asynchronmaschine.

Eine doppelt gespeiste Asynchronmaschine weist einen Stator und einen Rotor auf. Der Stator umfasst eine Wicklungsanordnung, welche in einem Betrieb der Asynchronmaschine vorzugsweise mit einem Stromnetz, beispielsweise dem 50 Hz-Verbundnetz, verbunden ist. Der Rotor weist eine Erregerwicklung auf, welche mit einem Stromrichter, insbesondere einem Umrichter, verbunden ist. Über den Umrichter kann die Erregerwicklung indirekt mit dem Stromnetz verbunden sein. Über den Stromrichter kann je nach Betriebsmodus der Asynchronmaschine elektrische Energie aus dem Netz in den Rotor oder von dem Rotor in das Netz gespeist werden. Dabei kann die Drehzahl des Rotors unter der Synchrondrehzahl liegen (untersynchroner Betrieb) oder über der Synchrondrehzahl (übersynchroner Betrieb).

Über die Erregerwicklung wird die Asynchronmaschine erregt. Dabei wird eine vom Stator aufgenommene oder abgegebene elektrische Leistung (Wirkleistung und Blindleistung) über die Erregung der Asynchronmaschine beziehungsweise des Rotors geregelt. Zum Erregen des Rotors beziehungsweise der Asynchronmaschine wird über den Stromrichter eine elektrische Spannung an der Erregerwicklung angelegt und/oder ein elektrischer Strom in die Erregerwicklung eingeprägt. Der Stromrichter weist hierzu eine Steuereinheit auf, welche Drehzahl und Winkel des Rotors über einen Drehgeber und Amplitude und Phasenlage der Spannung und/oder des Stroms in der Wicklungsanordnung über elektrische Messwandler misst. Mit anderen Worten wird die Erregung des Rotors abhängig von Drehzahl und Winkel des Rotors sowie abhängig von Amplitude und Phasenlage der Spannung und/oder des Stroms in der Wicklungsanordnung geregelt.

Außerdem sind drehgeberlose Regelverfahren bekannt, bei welchen die Winkel des Rotors über die Amplituden und Phasenlagen der Ströme und Spannungen im Stator und im Rotor bestimmt wird. Zusammengefasst handelt es sich stets um einen geschlossenen Regelkreis für die Regelung der Rotorspannung des Rotorstroms.

Nachteilig am Stand der Technik ist, dass der Stromrichter, insbesondere der Umrichter, spezifisch für die Asynchronmaschine ausgelegt sein muss.

Es ist Aufgabe der vorliegenden Erfindung, eine erleichterte Steuerung der Erregung der Asynchronmaschine zu ermöglichen.

Die Erfindung geht aus von einer doppelt gespeisten Asynchronmaschine, mit
- einem Rotor, der eine Erregerwicklung aufweist,
- einem Stator, der eine Wicklungsanordnung umfasst,
- einer elektrischen Erregereinheit zum Erregen der Asynchronmaschine über die Erregerwicklung, und
- einer Steuereinheit zum Steuern der Erregereinheit durch Einstellen zumindest einer elektrischen Größe für das Erregen.

Um nun eine erleichterte Steuerung der Erregung der Asynchronmaschine zu ermöglichen, ist erfindungsgemäß vorgesehen, dass die Steuereinheit keine signaltechnische oder elektrische Verbindung zu dem Stator aufweist, welche über eine reine Energieversorgung der Steuereinheit hinausgeht, sodass die zumindest eine elektrische Größe unabhängig von elektrischen Statorgrößen der Wicklungsanordnung von der Steuereinheit einstellbar ist.

Beispielsweise handelt es sich bei der Erregereinheit um eine Stromquelle oder eine Spannungsquelle. Die Wicklungsanordnung des Stators ist insbesondere dreiphasig ausgeführt. In einem Betrieb der Asynchronmaschine fließt dann ein Drehstrom als ein Statorstrom durch die Wicklungsanordnung. Der Statorstrom bezeichnet den Gesamtstrom, welcher durch die Wicklungsanordnung fließt. Als Statorspannung wird eine Spannung bezeichnet, welche an der Wicklungsanordnung anliegt. Dabei handelt es sich insbesondere um eine Dreiphasenwechselspannung. Die Statorspannung, der Statorstrom sowie deren Phasenlage, beispielsweise zueinander und/oder bezogen auf ein Stromnetz, sind Beispiele für Statorgrößen.

Die Erregerwicklung ist insbesondere dreiphasig ausgeführt. Die Erregereinheit kann demnach dazu eingerichtet sein, einen Stromfluss (Rotorstrom) in die Erregerwicklung einzuprägen und/oder eine Spannung (Rotorspannung) an der Erregerwicklung anzulegen. Hierdurch kann die Erregung der Asynchronmaschine erreicht werden. Die Erregereinheit kann dazu ausgebildet sein, je nach Betriebspunkt der Asynchronmaschine elektrische Leistung in die Erregerwicklung einzuspeisen oder aus der Erregerwicklung zu entnehmen. Die Steuereinheit kann dazu eingerichtet sein, diesen Stromfluss und/oder diese Spannung durch Einstellen der zumindest einen elektrischen Größe zu beeinflussen beziehungsweise zu steuern. Mit anderen Worten kann die Steuereinheit dazu eingerichtet sein, die Erregung der Asynchronmaschine durch Vorgeben der elektrischen Größe zu steuern, wobei mittels der elektrischen Größe wiederum der Rotorstrom und/oder die Rotorspannung beeinflusst beziehungsweise gesteuert werden. Die zumindest eine elektrische Größe betrifft beispielsweise Amplitude und/oder Frequenz des Rotorstroms und/oder der Rotorspannung.

Der Stromfluss beziehungsweise die Spannung in der Erregerwicklung kann durch die Steuereinheit derart einstellbar sein, dass sich in der Wicklungsanordnung ein bezüglich Amplitude und/oder Phasenlage vorbestimmter Statorstrom ergibt. Mit anderen Worten kann die Steuereinheit dazu ausgebildet sein, die Erregung so zu steuern, dass sich für den Statorstrom eine vorbestimmte Amplitude und/oder Phasenlage ergibt. Da die Steuereinheit keine signaltechnische oder elektrische Verbindung zu dem Stator aufweist, findet hierbei keine Rückkopplung statt. Auf den Rotor bezogene Größen, beispielsweise die Rotorspannung und/oder der Rotorstrom, sind durch die Steuereinheit durch Einstellen der zumindest einen elektrischen Größe unabhängig von dem Stator beziehungsweise ohne Interaktion mit dem Stator einstellbar. Beispielsweise ist die Steuereinheit eingerichtet, für die zumindest eine elektrische Größe einen vorbestimmten Wert einzustellen. Durch diese Form der Steuerung der Erregung der Asynchronmaschine sind Anforderungen an die Erregereinheit sowie an Messeinheiten besonders gering.

Die Steuereinheit und die Erregereinheit können mit einem Stromnetz, insbesondere dem 50 Hz-Verbundnetz, verbindbar sein. In diesem Fall kann die Erregereinheit dazu eingerichtet sein, beim Einprägen des Rotorstroms beziehungsweise beim Anlegen der Rotorspannung an die Erregerwicklung elektrische Energie aus der Erregerwicklung in das Stromnetz einzuspeisen oder elektrische Energie aus dem Stromnetz in die Erregerwicklung einzuspeisen. Der Stator beziehungsweise die Wicklungsanordnung kann direkt mit dem Stromnetz verbindbar sein.

Eine Ausgestaltungsform der Erfindung sieht vor, dass die Steuereinheit und die Erregereinheit ausschließlich zur Versorgung mit elektrischer Energie mit dem Stromnetz verbindbar sind und die Wicklungsanordnung ebenfalls mit dem Stromnetz verbindbar ist, wobei die Steuereinheit und die Erregereinheit ausschließlich auf diese Weise signaltechnisch oder elektrisch mit dem Stator verbindbar sind. Mit anderen Worten sind in einem Betrieb der Asynchronmaschine an dem Stromnetz die Erregereinheit und die Steuereinheit ausschließlich über das Stromnetz mit dem Stator beziehungsweise der Wicklungsanordnung verbunden. Die Steuereinheit kann stattdessen dazu ausgebildet sein, die elektrische Größe beziehungsweise den Rotorstrom und/oder die Rotorspannung zumindest teilweise basierend auf einer Frequenz des Stromnetzes vorzugeben.

Insbesondere ist die Erregereinheit dazu eingerichtet, die Erregerwicklung mit dem Stromnetz zu verbinden. Dabei kann die Verbindung zwischen Erregerwicklung und Stromnetz durch die Erregereinheit schaltbar sein. Beispielsweise weist die Erregereinheit zumindest ein Schaltelement zum Durchschalten einer Netzspannung von dem Stromnetz auf die Erregerwicklung auf. Das zumindest eine Schaltelement kann durch die Steuereinheit gesteuert beziehungsweise geschaltet werden. Durch geeignetes Schalten des zumindest einen Schaltelements ist in der Erregerwicklung der Rotorstrom beziehungsweise die Rotorspannung steuerbar.

Die Steuereinheit ist insbesondere zur Steuerung der Erregereinheit gemäß einem offenen Regelkreislauf ausgebildet. Mit anderen Worten wird aufgrund der fehlenden Verbindung der Steuereinheit zu dem Stator keine Rückkopplung anhand von Statorgrößen auf. Insbesondere ist die Steuereinheit nicht dazu ausgebildet, die Statorgrößen mit einem Sollwert zu vergleichen. Im Gegenteil ist die Steuereinheit vorzugsweise dazu ausgebildet, die elektrische Größe beziehungsweise den Rotorstrom und/oder die Rotorspannung frei von den Statorgrößen einzustellen beziehungsweise zu steuern.

Eine Weiterbildung sieht vor, dass die Steuereinheit eine Speichereinheit umfasst, in welcher ein Kennfeld zum Einstellen der zumindest einen elektrischen Größe speicherbar ist, und die Steuereinheit dazu ausgebildet ist, die Erregereinheit anhand des Kennfelds zu steuern. Beispielsweise ist durch das Kennfeld die zumindest eine elektrische Größe für einen oder mehrere Betriebspunkte der Asynchronmaschine fest vorgegeben. Die Steuereinheit kann in diesem Fall dazu ausgebildet sein, die Erregereinheit durch Einstellen der zumindest einen elektrischen Größe auf zumindest einen vorgegebenen Kennfeldwert, welcher aus dem Kennfeld ausgelesen wird, einzustellen. Durch das Kennfeld kann für viele Betriebspunkte der Asynchronmaschine eine passende Erregung vorgegeben werden. Insbesondere ist durch das Kennfeld eine umfassende Steuerung der Erregung möglich, ohne die Notwendigkeit der Rückkopplung. Das Kennfeld kann beispielsweise in einem Testbetrieb der Asynchronmaschine ermittelt beziehungsweise aufgezeichnet werden.

Eine Weiterbildung sieht vor, dass ein Drehwinkelgeber oder ein Drehzahlgeber auf einer Welle der Asynchronmaschine montiert ist. Diese Welle kann mechanisch mit dem Rotor verbunden sein. Insbesondere ist die Welle am Rotor angeordnet und rotiert gleichförmig zu diesem. Die Steuereinheit kann dazu eingerichtet sein, dessen Signal oder deren Signale zu verwenden, um von dem Drehwinkel und/oder der Drehrichtung und Drehzahl des Rotors zusammen mit dem Winkel und/oder der Drehrichtung und Frequenz des Rotordrehfeldes auf den Winkel und/oder der Drehrichtung und Frequenz des Statordrehfeldes zu schließen. Dadurch kann beispielsweise die Frequenz des Stromnetzes, das den Stator speist, bestimmt und überwacht werden, ohne direkt Statorgrößen zu messen.

Ist die Frequenz des Stromnetzes, das den Stator speist, aus einer anderen Quelle bekannt, z.B. beim Betrieb am 50 Hz-Verbundnetz oder durch eine durch eine von der hier beschriebenen Apparatur unabhängigen Steuerung oder Regelung des Stromnetzes, ist es ferner möglich, die Frequenz des Stromnetzes mit der Differenz aus der Drehzahl und der Frequenz des Rotordrehfeldes zu vergleichen und damit zu überwachen, dass das Statordrehfehld und das Rotordrehfeld synchron laufen (Synchronismus) und die Asynchronmaschine nicht kippt. Insbesondere ist der Steuereinheit in diesem Fall die bekannte Frequenz des Stromnetzes vorgebbar. Die Steuereinheit kann dazu eingerichtet sein, das oben genannte Vergleichen und/oder Überwachen durchzuführen. Auch in diesem Fall ist es nicht erforderlich, dass der Statorstrom oder die Statorspannung von der Steuereinheit gemessen werden.

Eine Weiterbildung sieht vor, dass die Erregereinheit als Stromrichter ausgeführt ist. Insbesondere kann die Erregereinheit als Umrichter ausgeführt sein. Der Stromrichter kann dazu ausgebildet sein, Phasenlage, Frequenz und/oder Amplitude des Rotorstroms und/oder der Rotorspannung bezüglich der Netzspannung zu richten. Mit anderen Worten kann der Stromrichter die Netzspannung derart richten, dass Phase, Frequenz und/oder Amplitude des Rotorstroms und/oder der Rotorspannung der durch die Steuereinheit eingestellten zumindest einen elektrischen Größe entsprechen. Der Stromrichter ist eine einfache und effektive Möglichkeit, den Rotor über das Stromnetz steuerbar zu erregen.

Eine Weiterbildung sieht vor, dass die Erregereinheit universell zur Bereitstellung oder Umformung elektrischer Energie unabhängig von der Asynchronmaschine ausgebildet ist. Mit anderen Worten ist die Erregereinheit bevorzugt nicht spezifisch auf den Zweck der Erregung der Asynchronmaschine ausgebildet, sondern universell einsetzbar, beispielsweise als Stromrichter oder Umrichter. Insbesondere ergibt sich durch die Möglichkeit der Verwendung eines universell einsetzbaren Stromrichters als die Erregereinheit ein besonders einfacher Aufbau der Asynchronmaschine.

Die Asynchronmaschine kann einer Last oder an einem Antrieb anschließbar sein. Beispielsweise weist eine Welle der Asynchronmaschine, welche Teil des Rotors ist, ein Kopplungselement zum Koppeln der Welle mit der Last oder dem Antrieb auf. Bei der Last handelt es sich beispielsweise um eine mechanische Last, beispielsweise eine mechanische Maschine, welche von der Asynchronmaschine antreibbar ist, oder um eine weitere elektrische Maschine, eine sogenannte Lastmaschine. Insbesondere ist die Last von der Asynchronmaschine in einem Motorbetrieb der Asynchronmaschine betreibbar. Die Asynchronmaschine kann dazu ausgebildet sein, in dem Motorbetrieb ein Drehmoment auf die Last zu übertragen. Bei dem Antrieb handelt es sich beispielsweise um eine elektrische Maschine, eine Turbine, beispielsweise beim Kraftwerk, oder ein Windrad einer Windkraftanlage. Die Asynchronmaschine kann dazu ausgebildet sein, ein Drehmoment von dem Antrieb zu empfangen. Die Asynchronmaschine ist durch den Antrieb in Rotation versetzbar. Insbesondere ist die Asynchronmaschine in einem Generatorbetrieb der Asynchronmaschine von dem Antrieb antreibbar.

An der Welle der Asynchronmaschine kann ein Drehschwingungstilger vorgesehen sein. Der Drehschwingungstilger kann einen vorbestimmten Anteil zu dem Trägheitsmoment des Rotors beitragen. Beispielsweise weist der Drehschwingungstilger einen Anteil an dem Trägheitsmoment des Rotors von 10 % auf. Bei dem Drehschwingungstilger handelt es sich insbesondere um ein federnd an der Welle gelagertes zusätzliches Trägheitsmoment. Durch die Dämpfung des Federelementes können Schwingungen der Welle minimiert werden.

Alternativ oder zusätzlich kann eine Dämpfung beispielsweise dadurch erreicht werden, dass ein Lüfterrad auf der Welle montiert wird.

Der Drehschwingungstilger, das Lüfterrad und die Last, insbesondere die Lastmaschine, stellen Beispiele dar, wie Schwingungen der Asynchronmaschine im Betrieb reduziert werden können. Durch Anschluss der Asynchronmaschine an die Last können Schwingungen, welche durch den erfindungsgemäßen Aufbau der Erregereinheit und der Steuereinheit entstehen können, reduziert beziehungsweise ausgeglichen werden. Ebenso können diese Schwingungen durch den Einsatz des Drehschwingungstilgers reduziert beziehungsweise ausgeglichen werden. Bei einer herkömmlichen Asynchronmaschine, deren Erregung per Rückkopplung in einem geschlossenen Regelkreis regelbar ist, sind derartige Maßnahmen nicht nötig.

Ein zweiter Aspekt der Erfindung betrifft ein Verfahren zum Betreiben einer doppelt gespeisten Asynchronmaschine. Das Verfahren geht von folgenden Schritten aus:
- Erregen einer Erregerwicklung eines Rotors der Asynchronmaschine durch eine Erregereinheit, und
- Steuern der Erregereinheit durch Einstellen zumindest einer elektrischen Größe für das Erregen.

Erfindungsgemäß ist vorgesehen, dass bei dem Steuern die zumindest eine elektrische Größe unabhängig von Ständergrößen einer Wicklungsanordnung eines Stators der Asynchronmaschine eingestellt wird. Mit anderen Worten kann die elektrische Größe rückkopplungsfrei eingestellt werden. Dabei wird die elektrische Größe beispielsweise allein anhand rotorbezogener Größen eingestellt.

Das erfindungsgemäße Verfahren ist dazu geeignet, eine doppelt gespeiste Asynchronmaschine der erfindungsgemäßen Art zu betreiben. Das erfindungsgemäße Verfahren und die erfindungsgemäße Asynchronmaschine beziehen sich somit aufeinander. Aus diesem Grund bilden Merkmale des erfindungsgemäßen Verfahrens auch die erfindungsgemäße Asynchronmaschine weiter und umgekehrt. Daher sind die bereits im Kontext der erfindungsgemäßen Asynchronmaschine beschriebenen Merkmale hier nicht erneut beschrieben.

Insbesondere ist bei dem erfindungsgemäßen Verfahren vorgesehen, dass die elektrische Größe für das Erregen gemäß einem offenen Regelkreislauf eingestellt wird. Mit anderen Worten kann die Erregung der Asynchronmaschine beziehungsweise des Rotors gemäß dem offenen Regelkreislauf gesteuert werden. Das bedeutet, dass eine Rückkopplung auf Basis von den Statorgrößen verzichtet wird. Insbesondere wird die elektrische Größe anhand eines Kennfeld des vorgegeben.

Eine Weiterbildung sieht vor, dass Amplitude und/oder Frequenz einer Spannung (Rotorspannung) oder eines Stromflusses (Rotorstrom) als die zumindest eine elektrische Größe für das Erregen eingestellt werden, sodass in dem Stator eine vorgegebene Phasenlage und eine vorgegebene Amplitude erreicht werden. Insbesondere wird dadurch in der Wicklungsanordnung des Stators eine vorgegebene Phasenlage und eine vorgegebene Amplitude des Statorstroms beziehungsweise der Statorspannung erreicht. Dabei wird die Phasenlage und/oder die Amplitude des Statorstroms beispielsweise errechnet, da auf die Rückkopplung der Statorgrößen, also beispielsweise Statorstrom oder Statorspannung, verzichtet wird. Beispielsweise sind in dem Kennfeld Werte für die Amplitude und/oder die Frequenz der Rotorspannung oder des Rotorstroms hinterlegt, für welche sich die vorgegebene Phasenlage und die vorgegebene Amplitude des Statorstroms beziehungsweise der Statorspannung ergibt. Diese Weise kann die Erregung des Rotors besonders einfach gesteuert werden.

Bei einem Startvorgang der Asynchronmaschine kann vorgesehen sein, dass die Amplitude der Spannung (Rotorspannung) und/oder des Stromflusses (Rotorstrom) kleiner als ein vorbestimmter Anlaufgrenzwert gewählt wird und die Frequenz der Spannung (Rotorspannung) und/oder des Stromflusses (Rotorstrom) auf eine Netzfrequenz eines Stromnetzes, an welches die Wicklungsanordnung des Stators anschließbar ist, eingestellt wird. Während des Startvorgangs und/oder in dem Betrieb der Asynchronmaschine ist insbesondere der Stator beziehungsweise die Wicklungsanordnung an das Stromnetz angeschlossen. Vorzugsweise ist außerdem die Erregerwicklung indirekt über die Erregereinheit an dem Stromnetz angeschlossen. Bei der Erregereinheit handelt es sich vorzugsweise um einen Stromrichter, insbesondere einen Umrichter. Somit kann beispielsweise die Netzfrequenz des Stromnetzes am Rotor beziehungsweise an der Erregereinheit gemessen werden. Der Anlaufgrenzwert kann fest vorgegeben sein, beispielsweise durch das Kennfeld. Als Teil des Startvorgangs kann anschließend die Wicklungsanordnung des Stators mit dem Stromnetz verbunden beziehungsweise aufgeschaltet werden. Dabei stellt sich die Phasenlage von Rotor und Stator zueinander automatisch ein. Bei dem Aufschalten der Wicklungsanordnung auf das Stromnetz können Ausgleichsströme fließen. Außerdem kann ein Drehmoment auf den Rotor erzeugt werden, durch welches die Phasenlage von Rotor und Stator zueinander durch Ausrichten des Rotors eingestellt werden kann. Dadurch, dass die Amplitude der Rotorspannung und/oder des Rotorstroms geringer gewählt wird, als der Anlaufgrenzwert, können die Ausgleichsströme geringer als ein vorbestimmter Grenzwert gehalten werden. Dieses insbesondere deshalb nötig, da aufgrund der fehlenden Rückkopplung beziehungsweise aufgrund der offenen Steuerung (gemäß des offenen Regelkreises) keine eindeutige Phasenlage von Rotor und Stator vorgegeben beziehungsweise einstellbar ist. Durch den beschriebenen Startvorgang stellt sich die Phasenlage jedoch automatisch auf einen fortlaufenden Wert ein.

Nach dem Anschließen beziehungsweise Aufschalten der Wicklungsanordnung an/auf das Stromnetz kann vorgesehen sein, dass die Amplitude der Spannung und/oder des Stromflusses auf einen vorbestimmten Betriebswert eingestellt wird. Der vorbestimmte Betriebswert ist dabei insbesondere um ein vorbestimmtes Maß größer als der Anlaufgrenzwert. Der Betriebswert kann dabei an eine Nennleistung oder einen Drehmoment der Asynchronmaschine angepasst sein. Davon ausgehend kann der vorbestimmte Anlaufgrenzwert um ein vorbestimmtes Maß kleiner vorgegeben sein.

Der Startvorgang kann auch erfolgen, wenn die Asynchronmaschine bereits rotiert. Das ist beispielsweise der Fall, wenn die Asynchronmaschine als Generator betrieben wird und von der Antriebsmaschine auf eine bestimmte Drehzahl gebracht wird. Damit die Ausgleichsströme und die Drehmomente während des Ausgleichsvorgangs möglichst gering sind, kann die Richtung und Frequenz des Rotordrehfeldes so vorgegeben werden, dass die Drehfrequenz des Rotordrehfeldes zusammen mit der Drehzahl des Rotors in etwa die Drehfrequenz des Statordrehfeldes ergibt. Das Rotordrehfeld kann sich dabei in Drehrichtung des Rotors als auch entgegen der Drehrichtung des Rotors bewegen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Es zeigen:
- FIG 1: ein Blockdiagramm einer doppelt gespeisten Asynchronmaschine welche an einem Stromnetz angeschlossen ist;
- FIG 2: den Verlauf rotorbezogener und statorbezogener elektrischer Größen während eines Startvorgangs der Asynchronmaschine;
- FIG 3: den Verlauf weiterer rotorbezogener und statorbezogener elektrischer Größen während eines Startvorgangs der Asynchronmaschine;
- FIG 4: ein Blockdiagramm einer möglichen Anordnung der Asynchronmaschine; und
- FIG 5: ein weiteres Blockdiagramm einer möglichen Anordnung der Asynchronmaschine.

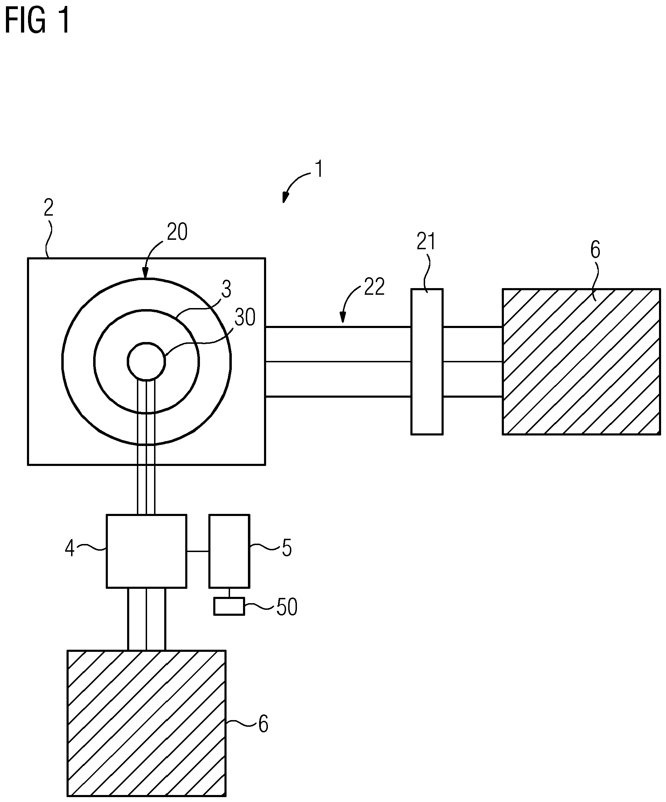

FIG 1 zeigt ein Blockdiagramm einer doppelt gespeisten Asynchronmaschine 1, welche einen Stator 2, einen Rotor 3, eine Erregereinheit 4 sowie eine Steuereinheit 5 umfasst. Eine Erregerwicklung 30 des Rotors 3 ist über die Erregereinheit 4 mit einem Stromnetz 6 verbindbar. Eine Wicklungsanordnung 20 (in der FIG nur äußerst schematisch dargestellt) ist über eine Schalteinheit 21 mit dem Stromnetz 6 verbindbar. Dabei ist die Wicklungsanordnung 20 insbesondere dreiphasig ausgeführt, weshalb eine Verbindung 22 drei Phasenstränge aufweist. Die Schalteinheit 21 kann Teil der Asynchronmaschine 1 sein. Mittels der Schalteinheit 21 kann die elektrische Verbindung 22 zwischen dem Stator 2 und dem Stromnetz 6 schaltbar sein. Insbesondere ist elektrische Verbindung 22 durch die Schalteinheit 21 trennbar.

Der Rotor 3 beziehungsweise die Asynchronmaschine 1 ist über die Erregerwicklung 30 des Rotors 3 erregbar. Dabei erfolgt die Erregung über die Erregereinheit 4. Gesteuert wird die Erregung durch die Steuereinheit 5, welche zumindest eine elektrische Größe für die Erregung vorgibt. Die Steuereinheit 5 kann eine Speichereinheit 50 umfassen, in welcher vorbestimmte Kriterien zum Einstellen der zumindest einen elektrischen Größe speicherbar sind. Beispielsweise ist in der Speichereinheit 50 ein Kennfeld für die zumindest eine elektrische Größe abgespeichert.

Die zumindest eine elektrische Größe, welche für die Erregung eingestellt wird, betrifft insbesondere eine Frequenz und eine Amplitude eines Stromflusses (Rotorstroms) oder einer Spannung (Rotorspannung) in der Erregerwicklung 30. Mit anderen Worten werden vorzugsweise zumindest zwei elektrische Größen für die Erregung eingestellt. Durch Einstellen der zumindest einen elektrischen Größe kann die Erregung der Asynchronmaschine 1 beziehungsweise Rotors 3 gesteuert werden.

Die Erregereinheit 4 ist vorliegend als Stromrichter, insbesondere als Umrichter ausgeführt. Über die Erregereinheit 4 wird der Rotorstrom und/oder die Rotorspannung der Erregerwicklung 30 derart gesteuert oder geregelt, dass der Rotorstrom beziehungsweise die Rotorspannung der zumindest einen elektrischen Größe, welche durch die Steuereinheit 5 eingestellt wird, entspricht. Beispielsweise weist die Erregereinheit 4 eines oder mehrere Schaltelemente auf, welche durch die Steuereinheit 5 gesteuert werden. Bei den Schaltelementen handelt es sich insbesondere um Transistoren, vorzugsweise Feldeffekttransistoren, oder um IGBTs (Bipolartransistor mit isolierter Gate-Elektrode).

Durch die Erregereinheit 4 kann je nach Betriebszustand der Asynchronmaschine 1 elektrische Leistung von der Erregerwicklung 30 in das Stromnetz 6 oder von dem Stromnetz 6 in die Erregerwicklung 30 eingespeist werden.

Die Erregung der Asynchronmaschine 1 beziehungsweise des Rotors 3 wird durch die Steuereinheit 5 vollkommen unabhängig von elektrischen Statorgrößen des Stators 2 gesteuert. Beispiele für Statorgrößen sind beispielsweise Statorströme oder Statorspannungen. Statorströme und Statorspannungen sind beispielsweise einzelne Phasenströme der einzelnen Phasen der Wicklungsanordnung 20 sowie ein daraus resultierender Gesamtstrom beziehungsweise eine daraus resultierende Gesamtspannung. Weitere Beispiele für Statorgrößen sind Drehzahl des Rotors 3 bezüglich des Stators 2 sowie eine Winkel des Rotors 3 bezüglich des Stators 2. Dabei handelt es sich um Größen, welche gemäß Stand der Technik beispielsweise einen Drehgeber des Stators gemessen werden.

Die Erregung des Rotors 3 beziehungsweise die zumindest eine elektrische Größe wird vorliegend im Sinne eines offenen Regelkreises gesteuert. Daher kann auf die Interaktion zwischen dem Stator 2 und der Erregereinheit 4 sowie der Steuereinheit 5 verzichtet werden. In dem Kennfeld können für mehrere Betriebspunkte beziehungsweise Betriebszustände der Asynchronmaschine 1 unterschiedliche Werte für die zumindest eine physikalische Größe vorgegeben werden. Die Steuerung der Rotorspannung oder des Rotorstroms erfolgt somit unabhängig von den statorbezogenen Größen.

Aufgrund der fehlenden Interaktion mit dem Stator 2 kann die Erregereinheit 4 als universell einsetzbarer Stromrichter ausgeführt sein. Insbesondere ist keine besondere Anpassung der Erregereinheit 4 an die Asynchronmaschine 1 notwendig. Die Anpassung der Erregung der Asynchronmaschine 1 erfolgt vorliegend ausschließlich durch die Steuereinheit 5.

Insbesondere ist der Stator 2 beziehungsweise die Wicklungsanordnung 20 in einem Normalbetrieb der Asynchronmaschine 1 direkt, das bedeutet ungeregelt, mit dem Stromnetz 6 verbunden. Das bedeutet, die Schalteinheit 21 stellt eine direkte elektrische Verbindung 22 der Phasenstränge mit dem Stromnetz 6 her. Handelt es sich bei dem Stromnetz 6 um das allgemeine 50 Hz-Verbundnetz, so ist die Netzspannung des Stromnetzes 6 fest vorgegeben und durch den Betrieb der Asynchronmaschine 1, als Elektromotor oder als Generator, nicht veränderbar. Daher handelt es sich bei dem Stromnetz 6 in diesem Fall um eine Spannungsquelle. Für diesen Fall hat es sich als vorteilhaft erwiesen, die Erregung des Rotors 3 stromgeführt zu steuern. Mit anderen Worten wird die zumindest eine elektrische Größe für den Rotorstrom vorgegeben. Die Erregereinheit 4 stellt in diesem Fall eine Stromquelle dar.

Im Allgemeinen ist es möglich, dass sowohl die Wicklungsanordnung 20 als auch die Erregerwicklung 30 jeweils an eine Stromquelle oder an eine Spannungsquelle angeschlossen werden. Als vorteilhaft hat sich jedoch erwiesen, wenn die Wicklungsanordnung 20 an eine Stromquelle und die Erregerwicklung 30 an eine Spannungsquelle angeschlossen wird oder dass umgekehrt die Wicklungsanordnung 20 eine Spannungsquelle und die Erregerwicklung 30 an eine Stromquelle angeschlossen wird. Da der Stator 2 vorzugsweise statisch mit dem Stromnetz 6, welches oftmals eine Spannungsquelle darstellt, verbunden wird, hatte sich als vorteilhaft erwiesen, die Erregereinheit 4 als Stromquelle auszuführen.

Vorteilhafterweise weist der Rotor 3 beziehungsweise eine Welle, welche Teil des Rotors 3 ist oder mit dem Rotor 3 verbunden ist, einen Drehschwingungstilger auf. Der Drehschwingungstilger weist ein Trägheitsmoment auf, welches beispielsweise 10 % des Rotors 3 beträgt. Das Trägheitsmoment des Drehschwingungstilgers kann federnd an der Welle gelagert sein. Insbesondere das Trägheitsmoment des Drehschwingungstilgers elastisch und gedämpft an die Welle angebunden. Alternativ oder zusätzlich kann an der Welle ein Lüfterrad angeordnet sein.

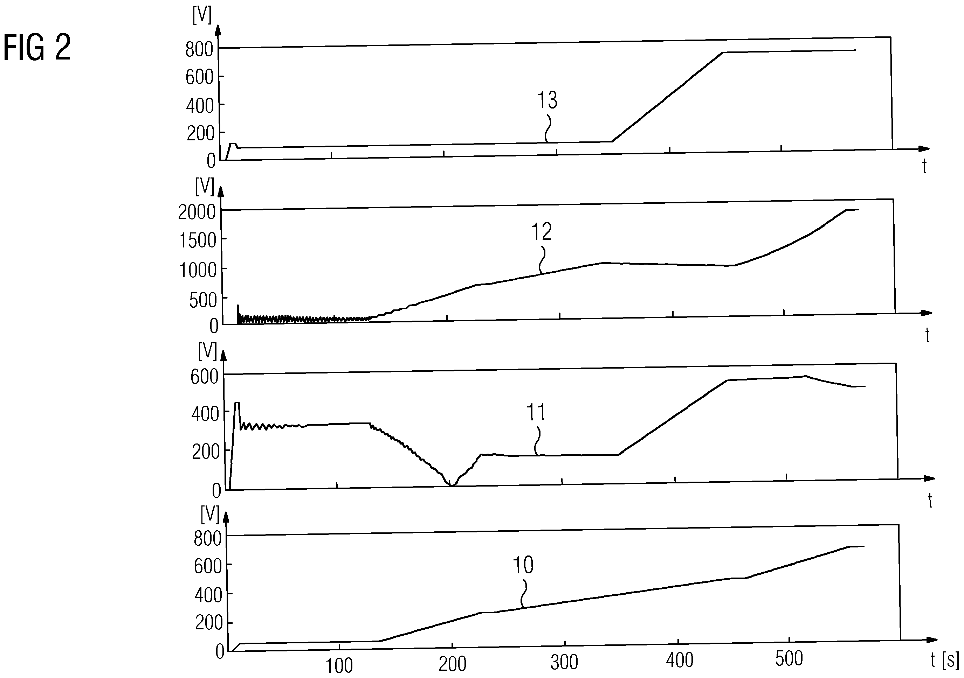

FIG 2 zeigt mehrere statorbezogene und rotorbezogene elektrische Größen auf einer Zeitskala t (in Sekunden) dargestellt. FIG 2 stellt dar: den Rotorstrom 10, die Rotorspannung 11, den Statorstrom 12 und die Statorspannung 13. Dabei sind die vier Größen jeweils in Volt (V) dargestellt. Dabei befindet sich die Asynchronmaschine zur Zeit t von 0 s im Stillstand. Somit zeigt FIG 2 ist einen Startvorgang der Asynchronmaschine 1. Der Startvorgang der Asynchronmaschine 1 ist bei dem vorliegenden Verfahren der Steuerung der Erregung besonders wichtig, da die Felder von Stator 2 und Rotor 3 zunächst üblicherweise nicht fluchten. Das bedeutet, dass die Phasenlage zwischen Stator 2 und Rotor 3 zunächst undefiniert ist. Es ist zunächst nötig, die Felder von Stator 2 und Rotor 3 zueinander auszurichten.

Gemäß FIG 2 wird hierzu der Rotor 3 zunächst mit einem Rotorstrom 10, dessen Amplitude geringer ist als ein vorbestimmter Anlaufgrenzwert, betrieben. Der Anlaufgrenzwert ist um ein vorbestimmtes Maß kleiner als ein vorbestimmter Betriebswert, auf welchen die Amplitude des Rotorstroms 10 in einem Normalbetrieb, beispielsweise bei Nennleistung, der Asynchronmaschine 1 eingestellt wird. Durch Einprägen des Rotorstroms 10 in die Erregerwicklung 30 ergibt sich eine Rotorspannung 11 an der Erregerwicklung 30. Die Frequenz des Rotorstroms 10 wird auf die Netzfrequenz des Stromnetzes 6 festgelegt. Der Stator 2 beziehungsweise die Wicklungsanordnung 20 ist zunächst noch von dem Stromnetz 6 getrennt.

Wird der Stator 2 beziehungsweise die Wicklungsanordnung 20 mit dem Stromnetz 6 verbunden. Dies erfolgt beispielsweise durch Schließen jeweiliger Schalter der Schalteinheit 21. Dadurch ergibt sich ein Ausgleichsvorgang, bei welchen in der Wicklungsanordnungsströme 20 fließen und ein Drehmoment auf den Rotor 3 erzeugen, sodass sich der Rotor 3 im Feld des Stators 2 ausrichtet. Dadurch wird die Phasenlage zwischen dem Stator 2 und dem Rotor 3 passend eingestellt. Insbesondere ist der vorbestimmte Anlaufgrenzwert hinreichend klein gewählt, so dass die Ausgleichsströme ein vorbestimmtes Maß nicht überschreiten.

Bei der Asynchronmaschine 1 ist es möglich die Drehzahl zu verändern. Mit anderen Worten bietet die Asynchronmaschine 1 die Möglichkeit zu einer Regelung der Drehzahl. Dies erfolgt insbesondere über eine kontinuierliche Änderung der Frequenzen von Stator 2 beziehungsweise Rotor 3. Insbesondere werden die Frequenzen des Statorstroms und/oder der Statorspannung beziehungsweise die Frequenzen des Rotorstroms und/oder der Rotorspannung kontinuierlich geändert, um die Drehzahl zu ändern. Durch die kontinuierliche Veränderung der Frequenzen geht der Synchronismus zwischen Stator 2 und Rotor 3 nicht verloren. Neben der Frequenz von Rotorstrom und/oder Rotorspannung (Drehfrequenz) kann auch die Drehrichtung des Rotordrehfeldes verändert werden, so dass eine beliebige Drehzahl des Rotors erreicht werden kann. Alternativ oder zusätzlich kann die Amplitude des Rotorstroms beziehungsweise der Rotorspannung verändert werden, um die Wirkleistung sowie die Blindleistung der Asynchronmaschine 1 zu steuern. Beispielsweise wird durch Vorgeben eines vorbestimmten Werts für die Amplitude des Rotorstroms oder der Rotorspannung die Wirkleistung und/oder die Blindleistung der Asynchronmaschine 1 auf einen weiteren vorbestimmten Wert eingestellt.

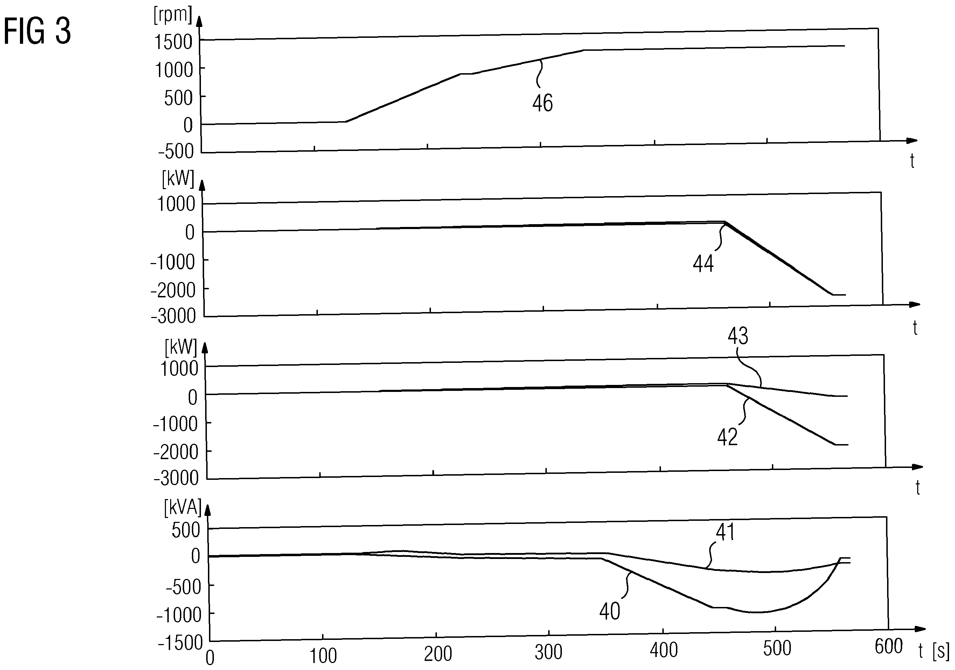

FIG 3 zeigt denselben Startvorgang der Asynchronmaschine 1 wobei andere Größen auf derselben Zeitachse t (in Sekunden) aufgetragen sind: elektrische Blindleistung des Rotors 40 (in kVA), elektrische Blindleistung des Stators 41 (in kVA), elektrische Wirkleistung des Rotors 42 (in kW), elektrische Wirkleistung des Stators 43 (in kW), mechanische Leistung der Asynchronmaschine 44 (in kW) sowie Drehzahl des Rotors 46 (in Umdrehungen pro Minute, rpm).

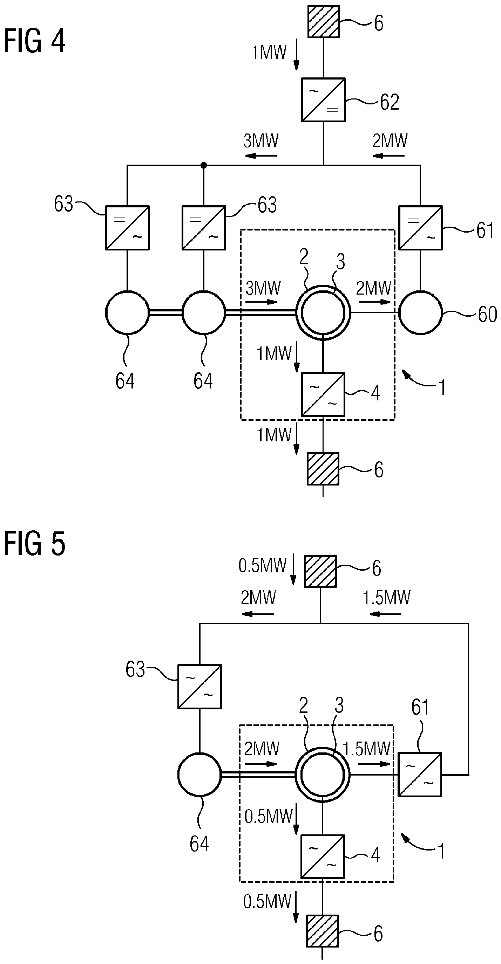

Die FIG 4 und die FIG 5 zeigen jeweils eine Anordnung mit der Asynchronmaschine 1. Dabei kann es sich um Prüfstände für die Asynchronmaschine 1 handelt. Beispielsweise kann auf den Prüfständen das Kennfeld für die Asynchronmaschine 1 erstellt werden.

In FIG 4 ist die Asynchronmaschine 1 in einer Testumgebung beziehungsweise auf einem Prüfstand dargestellt. Hierbei befindet sich die Asynchronmaschine 1 in einem Generatorbetrieb. Vorliegend wird die Asynchronmaschine 1 mechanisch über zwei Lastmaschinen 64 angetrieben. Elektrische Energie wird aus dem Rotor 3 der Asynchronmaschine 1 in das Stromnetz 6 gespeist. Außerdem wird elektrische Energie aus dem Stator 2 der Asynchronmaschine 1 in eine Synchronmaschine 60 gespeist. Die beiden Lastmaschinen 64 werden durch jeweilige Umrichter 63 gesteuert. Die Umrichter 63 werden wiederum über spannungsgeregelte Umrichter 61, 62 mit einer elektrischen Spannung versorgt. Die Erregereinheit 4 ist in diesem Beispiel als stromgeregelter Umrichter ausgebildet. Elektrische und mechanische Energieflüsse sind der FIG 4 zu entnehmen.

FIG 5 zeigt die Asynchronmaschine 1 in einem anderen Testaufbau. Auch hier ist die Erregereinheit 4 als stromgeregelter Umrichter ausgebildet. Die elektrische Leistung aus dem Stator 2 der Asynchronmaschine 1 wird hierbei direkt dem spannungsgeregelten Umrichter 61 zugeführt. Im Beispiel von FIG 5 weist der Testaufbau nur eine Lastmaschine 64 auf, welche über einen Umrichter 63 gesteuert wird.

## Patentansprüche

1. Doppelt gespeiste Asynchronmaschine (1), mit
- einem Rotor (3), der eine Erregerwicklung (30) aufweist,
- einem Stator (2), der eine Wicklungsanordnung (20) umfasst,
- einer elektrischen Erregereinheit (4) zum Erregen der Asynchronmaschine (1) über die Erregerwicklung (30), und
- einer Steuereinheit (5) zum Steuern der Erregereinheit (4) durch Einstellen zumindest einer elektrischen Größe für das Erregen,
**dadurch gekennzeichnet, dass**
- die Steuereinheit (5) keine signaltechnische oder elektrische Verbindung zu dem Stator (2) aufweist, welche über eine reine Energieversorgung der Steuereinheit (5) hinausgeht, sodass die zumindest eine elektrische Größe unabhängig von elektrischen Statorgrößen der Wicklungsanordnung (20) von der Steuereinheit (5) einstellbar ist.

2. Asynchronmaschine (1) nach Anspruch 1, **dadurch gekennzeichnet, dass** die Steuereinheit (5) und die Erregereinheit (4) ausschließlich zur Versorgung mit elektrischer Energie mit einem Stromnetz (6) verbindbar sind und die Wicklungsanordnung (20) ebenfalls mit dem Stromnetz (6) verbindbar ist, wobei die die Steuereinheit (5) und die Erregereinheit (4) ausschließlich auf diese Weise signaltechnisch oder elektrisch mit dem Stator (2) verbindbar sind.

3. Asynchronmaschine (1) nach Anspruch 1 oder 2, **dadurch gekennzeichnet, dass** die Steuereinheit (5) zur Steuerung der Erregereinheit (4) gemäß einem offenen Regelkreislauf ausgebildet ist.

4. Asynchronmaschine (1) nach einem der vorhergehenden Ansprüche, **dadurch gekennzeichnet, dass** die Steuereinheit (5) eine Speichereinheit (50) umfasst, in welcher ein Kennfeld zum Einstellen der zumindest einen elektrischen Größe speicherbar ist, und die Steuereinheit (5) dazu ausgebildet ist, die Erregereinheit (4) anhand des Kennfeldes zu steuern.

5. Asynchronmaschine (1) nach einem der vorhergehenden Ansprüche, **dadurch gekennzeichnet, dass** die Erregereinheit (4) als Stromrichter ausgeführt ist.

6. Asynchronmaschine (1) nach einem der vorhergehenden Ansprüche, **dadurch gekennzeichnet, dass** die Erregereinheit (4) universell zur Bereitstellung oder Umformung elektrischer Energie unabhängig von der Asynchronmaschine (1) ausgebildet ist.

7. Verfahren zum Betreiben einer doppelt gespeisten Asynchronmaschine (1), mit den Schritten:
- Erregen einer Erregerwicklung (30) eines Rotors (3) der Asynchronmaschine (1) durch eine Erregereinheit (4),
- Steuern der Erregereinheit (4) durch Einstellen zumindest einer elektrischen Größe für das Erregen,
**dadurch gekennzeichnet, dass**
- bei dem Steuern die zumindest eine elektrische Größe unabhängig von Ständergrößen einer Wicklungsanordnung (20) eines Stators (2) der Asynchronmaschine (1) eingestellt wird.

8. Verfahren nach Anspruch 7, **dadurch gekennzeichnet, dass** Amplitude und/oder Frequenz einer Spannung oder eines Stromflusses als die zumindest eine elektrische Größe für das Erregen eingestellt werden, sodass in dem Stator eine vorgegebene Phasenlage und eine vorgegebene Amplitude erreicht werden.

9. Verfahren nach Anspruch 8, **dadurch gekennzeichnet, dass** bei einem Startvorgang der Asynchronmaschine (1) die Amplitude der Spannung und/oder des Stromflusses kleiner als ein vorbestimmter Anlaufgrenzwert und die Frequenz der Spannung und/oder des Stromflusses auf eine Netzfrequenz eines Stromnetz (6), an welches die Wicklungsanordnung (20) des Stators (2) anschließbar ist, eingestellt wird.

10. Verfahren nach Anspruch 9, **dadurch gekennzeichnet, dass** nach einem Anschließen der Wicklungsanordnung (20) an das Stromnetz (6) die Amplitude der Spannung und/oder des Stromflusses auf einen vorbestimmten Betriebswert eingestellt wird, der zumindest um ein vorbestimmtes Maß größer ist als der Anlaufgrenzwert.
